# EUROPÄISCHE PATENTSCHRIFT

(11) **EP 2 063 050 B1**
(45) Veröffentlichungstag und Bekanntmachung des Hinweises auf die Patenterteilung: **08.05.2013**
(21) Anmeldenummer: 08169712.0
(22) Anmeldetag: 21.11.2008
(51) Int. Cl.: E04H 9/14, E06B 9/165, E06B 9/17, E06B 9/58

(54) **Schutzvorrichtung zur Absperrung von Fenster- oder Türöffnungen gegen spritzende, fließende, stehende und drückende flüssige bis zähfließende Medien**
Protective device for blocking off window or door openings to protect against spraying, flowing, standing and pressing fluid to viscous media
Dispositif de protection destiné au verrouillage d'ouvertures de fenêtre ou de porte contre les milieux aspergés, s'écoulant, solides et pressés, liquides à s'écoulant difficilement

(30) Priorität: 21.11.2007 DE 202007016447 U
(43) Veröffentlichungstag der Anmeldung: 27.05.2009
(73) Patentinhaber: Zache, Lothar, 16556 Borgsdorf (DE); Peter, Raisa, 12277 Berlin (DE)
(72) Erfinder: Zache, Lothar, 16556 Borgsdorf (DE)
(74) Vertreter: Ziebig, Marlene

(56) Entgegenhaltungen:
- FR-A1- 2 514 816
- GB-A- 475 424

## Beschreibung

Die Erfindung betrifft eine Schutzvorrichtung zur Absperrung von Fenster- oder Türöffnungen gegen spritzende, fließende, stehende und drückende flüssige bis zähfließende Medien mit horizontal angeordneten, miteinander gelenkig verbundenen Jalousie-Elementen und einem nach einer Seite offenen Führungsrahmen, der zwei seitlich an den Jalousie-Elementen angeordnete Führungsschienen aufweist, in denen die Jalousie-Elemente vertikal verschiebbar angeordnet sind.

Zur Absperrung von Geländeabschnitten, Flächen und Gebäuden bzw. Gebäudeteilen sind Planen-, Jalousie- oder auch Dammbalkensysteme üblicher Bauarten allgemein bekannt. Es gibt diese Systeme in verschiedenen ein- oder mehrteiligen Ausführungsformen, in Verbindung untereinander wie auch mit z. B. Sandsäcken und weiteren ortsungebundenen wie auch ortsfesten Variationen, die im Einsatzfall in der Regel umfunktioniert und zweckentfremdet eingesetzt werden.

Bekannte Nachteile dieser Konstruktionen sind ihre nur sehr bedingte Eignung für die zuverlässige Absperrung gegen flüssige bis zähfließende Medien sowie ihre vielfach nicht gegebene Eignung für den Einsatz bei statisch anspruchsvollen technischen Herausforderungen, wie z. B. sich linear aufbauenden Druckverhältnissen infolge stehender und drückender Medien, insbesondere bei der Sicherung von Gebäuden. Eine Schutzvorrichtung gemäß dem Oberbegriff des Anspruchs 1 wird durch GB 475 424 A offenbart.

Der Erfindung liegt somit die Aufgabe zugrunde, eine Schutzvorrichtung vorzuschlagen, die für den jederzeitigen Einsatz zur Absperrung, insbesondere von Gebäudeöffnungen, wie Fenster, Türen oder Tore gegen sowohl spritzende, fließende, stehende als auch drückende flüssige bis zähfließende Medien geeignet ist.

Diese Aufgabe wird mit einer Schutzvorrichtung mit den Merkmalen des Hauptanspruchs 1 gelöst. Die Unteransprüche enthalten vorteilhafte Ausgestaltungen der erfindungsgemäßen Schutzvorrichtung.

Die erfindungsgemäße Schutzvorrichtung zur Absperrung von Fenster- oder Türöffnungen gegen spritzende, fließende, stehende und drückende flüssige bis zähfließende Medien besitzt in üblicher Weise horizontal angeordnete, miteinander gelenkig verbundene, vorzugsweise langgestreckte Jalousie-Elemente, die vor oder in der Gebäudeöffnung herabgelassen oder empor geschoben werden, einen Verbund bilden damit und diese verschließen. Zur seitlichen Führung verfügt die Schutzvorrichtung über einen Führungsrahmen, in dem sich die Jalousie-Elemente bzw. der Verbund verschieben lassen. Dieser Führungsrahmen ist an einer Seite offen, vorzugsweise oben, um die Jalousieelemente nach oben herausziehen bzw. herablassen zu können. Dabei sind je nach Ausgestaltung der Schutzvorrichtung als Außenjalousie, Rollladen, Rolltor oder Sektionaltor verschiedene Möglichkeiten gegeben, die nach dem Stand der Technik allgemein bekannt sind. Je nach Ausgestaltung sind weitere übliche Einrichtungen der Schutzvorrichtung vorzusehen.

Die gelenkige Verbindung der Jalousie-Elemente erfolgt mit üblichen aus dem Stand der Technik bekannten Mitteln. Diese müssen eine Verschiebbarkeit der einzelnen Jalousieelemente in Relation zueinander zulassen, um eine Kompression der Dichtungsprofile zu ermöglichen. Dies ist beispielsweise ein entlang einer Kante der Jalousie-Elemente ausgebildeter Hohlraum mit einer gegenüber dem Hohlraum verschmälerten langgestreckten Öffnung, in die ein korrespondierend ausgebildetes abstehendes Segment der anderen Kante eines Jalousie-Elements mit einer endständigen Verdickung eingreift, wobei die Verdickung größer ist als die Öffnung des Hohlraums, so dass ein vertikales Herausziehen nicht möglich ist.

Der Führungsrahmen kann, wie beschrieben, auch nach unten offen sein, so dass die Jalousie-Elemente nicht von oben herabgelassen werden, sondern von unten empor geschoben werden können, so dass die Gebäudeöffnung einem Wasserstand angepasst verschlossen werden kann, um noch eine Belichtung der Räume zu ermöglichen. In diesem Fall und auch für den umgekehrten Fall ist ein weiteres Dichtungsprofil für die offene Seite des Führungsrahmens vorzusehen, das auch manuell nach Ausbildung des Verbundes eingesetzt werden kann.

Der Führungsrahmen weist zumindest zwei seitlich an den Jalousie-Elementen angeordnete Führungsschienen, die vorzugsweise die Jalousie-Elemente beidseitig umgreifen, auf, wobei diese, vorzugsweise unten, vorzugsweise über eine Abschlussschiene miteinander verbunden sind.

Erfindungsgemäß ist zwischen den einzelnen Jalousie-Elementen zur Abdichtung des Verbundes jeweils mindestens ein Dichtungsprofil sowie zwischen dem Führungsrahmen bzw. den Führungsschienen und den Jalousie-Elementen jeweils mindestens ein Dichtungsprofil angeordnet. Vorzugsweise weist das unterste Jalousie-Element auf der dem Verbund abgewandten Seite ebenfalls ein Dichtungsprofil auf, das gegebenenfalls an der Abschlussschiene anliegt. Dieses Dichtungsprofil kann aber auch an der Abschlussschiene angeordnet sein.

Die Dichtungsprofile können aus beliebigen gegenüber genannten Medien resistenten, vorzugsweise elastischen Natur- oder Kunststoffen bestehen. Die Dichtungsprofile können hohl oder massiv ausgeführt und gegebenenfalls mit Dichtlippen versehen sein. Die Dichtungsprofile für den Führungsrahmen können zudem auch aufblasbar ausgestaltet sein.

Die Dichtungsprofile sind vorzugsweise kraft- und formschlüssig mit dem jeweiligen Jalousie-Element oder den entsprechenden Teilen des Führungsrahmens verbunden.

Die Verbindung kann in beliebiger Weise erfolgen, wobei ein Verkleben und/oder eine Halterung mittels eines formschlüssigen Gegenprofils oder eine vergleichbare alternative mechanische Verbindungen bevorzugt ist, besonders bevorzugt ist die Halterung mittels des Gegenprofils.

Die Bestandteile der Sicherheitsvorrichtung können aus verschiedensten Materialien, wie Metall, Kunststoff oder Kombinationen daraus gefertigt sein. Bevorzugt wird Metall, insbesondere Aluminium. Die Jalousie-Elemente können massiv oder zur Gewichtsreduktion mit Hohlräumen versehen sein, die gegebenenfalls durch Stege oder dergleichen verstärkt sein können. Ebenso können die Jalousie-Elemente profiliert sein, um einem Wasserdruck besser standhalten zu können.

Bei einer zu großen Länge der langgestreckten Jalousie-Elemente ist ein vertikaler Mittelbalken vorgesehen, der gebäudeseitig die Lamellen-Elemente stützt. Dieser ist vorzugsweise über geeignete Mittel mit dem Führungsrahmen oder dem Gebäude verbindbar.

Nach einer vorteilhaften Ausgestaltung der Erfindung kann der bis zu einer der Funktion entsprechenden Endlage ausgefahrene Verbund der Jalousie-Elemente gegenüber dem Führungsrahmen mittels eines in seiner Wirkspannung regulierbaren Längskeiles kraft- und formschlüssig verkeilt werden, indem dieser zwischen den Jalousie-Elementen und den Führungsschienen und gegebenenfalls der Abschlussschiene gesteckt wird.

Die an den Führungsschienen, die vorzugsweise die Jalousie-Elemente beidseitig umgreifen, angeordneten Dichtungsprofile sind jeweils in den Führungsschienen auf beiden zu den Jalousie-Elementen gewandten Seiten angeordnet. Es ist auch möglich, mehrere, vorzugsweise zwei Dichtungsprofile auf den jeweiligen Seiten des Führungsschiene nebeneinander anzuordnen.

Vorzugsweise können die Führungsschienen auch zusätzlich zu den Jalousie-Elementen gewandte Gleitprofile aufweisen, vorzugsweise aus reibungsreduzierenden Hartkunststoffen.

Nach einer bevorzugten Ausführungsform der Erfindung weisen die Jalousie-Elemente an den Enden jeweils zumindest eine Rolle, die in der entsprechenden Führungsschiene läuft, auf, um das Verschieben im Führungsrahmen zu erleichtern.

Die erfindungsgemäße Schutzvorrichtung weist ansonsten übliche Mittel zur Bewegung der Jalousie-Elemente in Relation zum Führungsrahmen auf.

Nach einer besonders bevorzugten Ausführungsform weist die Schutzvorrichtung Mittel zur Druckbeaufschlagung der Jalousie-Elemente in vertikaler und/oder horizontaler Richtung auf, so dass die Dichtungsprofile zusammengedrückt werden und damit die Abdichtung optimiert werden kann. In vertikaler Richtung kann dies durch Elektromotoren erfolgen, die ansonsten die Jalousie-Elemente heben und senken. Es können aber auch manuell einzusetzende Elemente zum Verkeilen oder dergleichen sein.

Zur Druckbeaufschlagung in horizontaler Richtung kann oben genannter Längskeil eingesetzt werden. Es ist aber auch möglich, aufblasbare Elemente analog zum Längskeil im Führungsrahmen einzubringen oder dort vorzusehen, die mit Druckluft, einem anderen Gas oder einem sonstigen Medium expandiert werden können. Dies können auch genannte aufblasbare Dichtungsprofile sein.

Die erfindungsgemäße Schutzvorrichtung kann vorteilhafterweise überall dort eingesetzt werden, wo derzeit existierende Absperrsysteme infolge verschiedenster mechanischer, statischer und sonstiger technisch bedingter Umstände nicht dem erforderlichen Einsatzzweck zu entsprechen in der Lage sind.

Es erfolgt eine Absperrung gegen spritzende, fließende, stehende und drückende flüssige bis zähfließende Medien, wobei der Verbund der Jalousie-Elemente gegenüber dem Führungsrahmen durch Dichtungsprofile kraft- und formschlüssig abgedichtet ist.

Damit besteht die Möglichkeit, eine ortsfeste Montage der Schutzvorrichtung überall dort vorzunehmen, wo die Wahrscheinlichkeit eines möglichen Einsatzfalles überdurchschnittlich hoch ist; wie z. B. in klassischen Überschwemmungsgebieten, unmittelbaren Einzugsbereichen von Tankanlagen usw.

Nachstehend wird die Erfindung anhand von Zeichnungen näher erläutert: Es zeigen:
- Fig. 1.: in einer geschnittenen Seitenansicht eine erfindungsgemäße Sicherheitsvorrichtung,
- Fig. 2.: in einer geschnittenen Seitenansicht Jalousie-Elemente mit Dichtungsprofilen,
- Fig. 3.: in einer Draufsicht die erfindungsgemäße Sicherheitsvorrichtung,
- Fig. 4.: in geschnittenen Seitenansichten drei verschiedene Ausführungsformen von Jalousie-Elementen,
- Fig. 5.: in geschnittenen Seitenansichten zwei verschiedene Ausführungsformen von Jalousie-Elementen mit seitlichen Rollen,
- Fig. 6.: in geschnittenen Aufsichten eine Führungsschiene mit eingeschobenen Lamellen-Element,
- Fig. 7.: in geschnittenen Aufsichten zwei Führungsschiene mit unterschiedlichen Dichtungsprofilen mit eingeschobenen Lamellen-Element und,
- Fig. 8.: in geschnittener Aufsicht eine Führungsschiene mit zwei Mauerwerksabdichtungen.

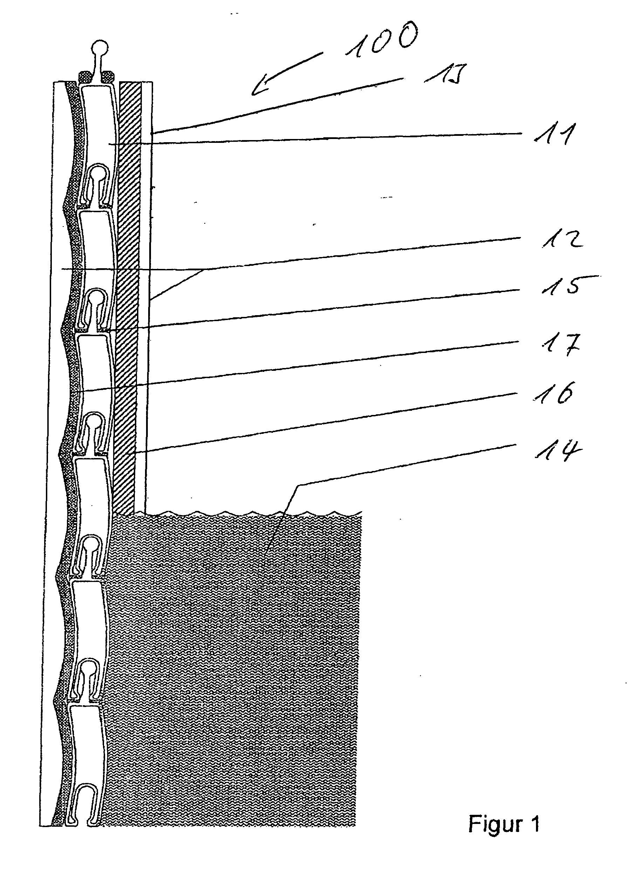

Fig. 1 zeigt ein Detail der erfindungsgemäßen Schutzvorrichtung 100, die gelenkig miteinander verbundene Jalousie-Elemente 11 aufweist, die in einer Führungsschiene 12 eines Führungsrahmens 13 laufen. Im unteren Teil der Schutzvorrichtung 100 steht das abzusperrende Medium 14 an, das gegen die Jalousie-Elemente 11 drückt. Zwischen den Jalousie-Elementen 11 ist jeweils ein Dichtungsprofil 15 angeordnet, wodurch der Verbund der einzelnen Jalousie-Elemente 11 abgedichtet ist. In die Führungsschiene 12 ist auf der zum abzusperrenden Medium 14 gewandten Seite ein Längskeil 16 eingefügt, der eine Abdichtung zwischen Führungsschiene 12 und den Jalousie-Elementen 11 bewirkt und diese zudem an ein zweites Dichtungsprofil 17 andrückt, das in der Führungsschiene 12 auf der Rückseite der Jalousie-Element 11 angeordnet ist.

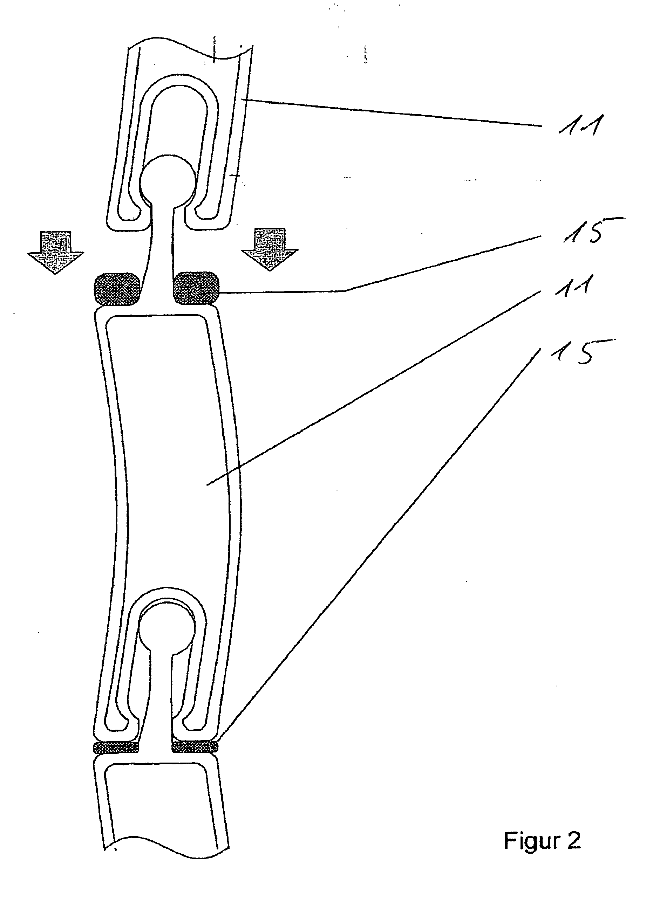

In Fig. 2 ist eine Ausführungsform zur gelenkigen Verbindung der Jalousie-Elemente 11 mit üblichen Mitteln dargestellt. Wesentlich für alle derartigen Ausgestaltungen ist, dass neben der Gelenkigkeit der Verbindung auch eine Verschiebbarkeit der Jalousie-Elemente 11 in Relation zueinander gegeben ist, so dass das jeweilige Dichtungsprofil 15 zusammendrückbar ist.

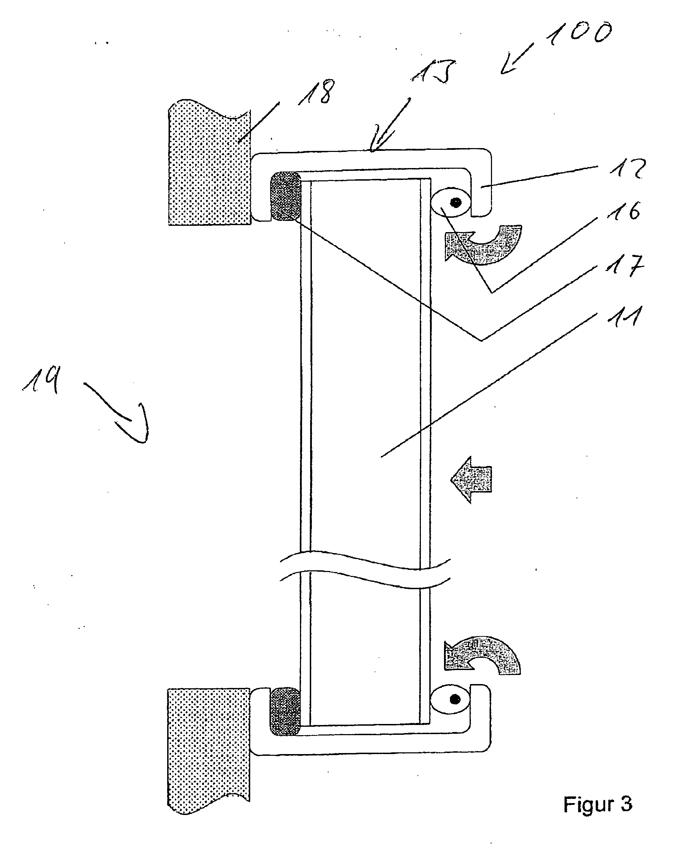

Die in Fig. 3 gezeigte Schutzvorrichtung 100 entspricht der in Figur 1 dargestellten, wobei hier zusätzlich die Anbindung an ein Mauerwerk 18 vor einer Gebäudeöffnung 19 gezeigt ist. Der Druck des abzusperrenden Mediums 14 auf die Schutzvorrichtung 100 wird durch Pfeile dargestellt.

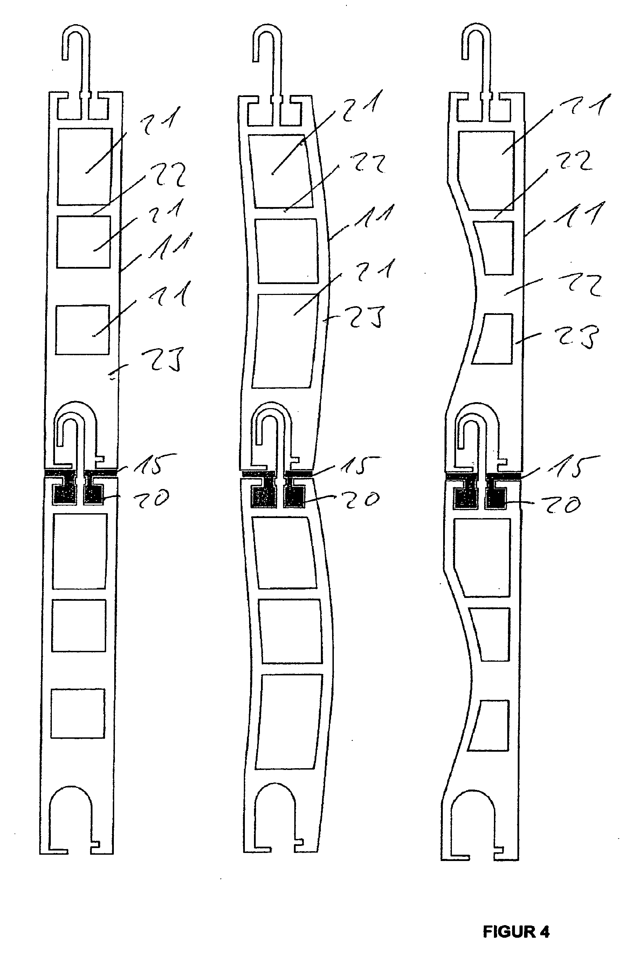

Drei verschiedene Ausführungsformen von Jalousie-Elementen 11 sind in Fig. 4 gezeigt. Zudem sind bei den drei Varianten die Dichtungsprofile 15 ohne Hohlraum ausgeführt, die jedoch nach anderen Ausführungsformen möglich sind. Ferner sind die Dichtungsprofile 15 über formschlüssige Gegenprofile 20 am Jalousie-Element 11 befestigt. Alle drei Ausführungsformen der Jalousie-Elemente 11 weisen Hohlräume 21 auf, die durch Stege 22 stabilisiert werden, die unterschiedlich stark bemessen sein können. Die Wandungen 23 der Jalousie-Elemente sind parallel, oder in die gleiche Richtung gewölbt oder es sind beide Varianten miteinander kombiniert.

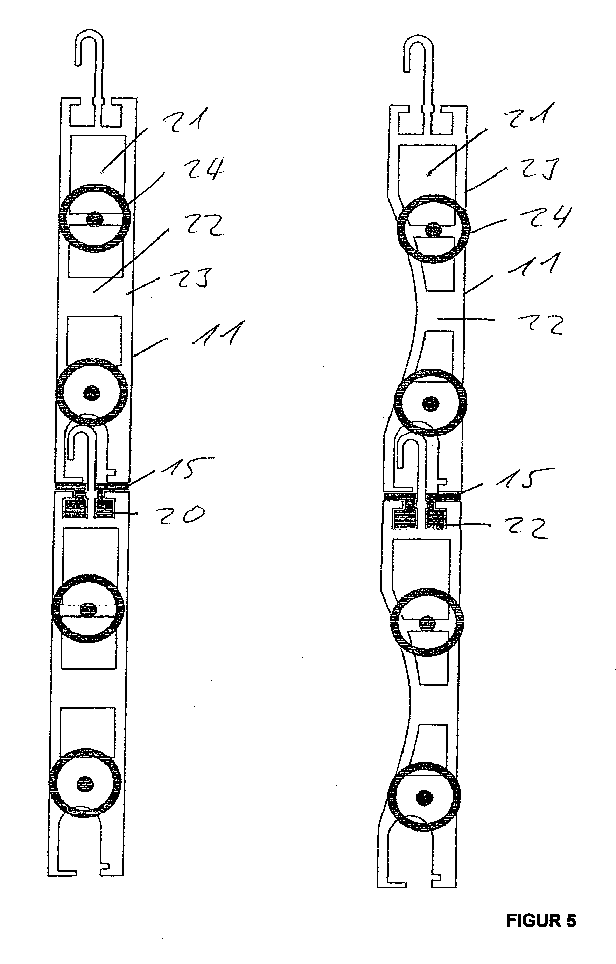

Die Ausführungsformen der Fig. 5 entsprechen vorgenannten Ausführungsformen, wobei jedes Jalousie-Element 11 seitlich jeweils zwei Rollen 24 besitzt, die in den hier nicht dargestellten Führungsschienen 12 laufen.

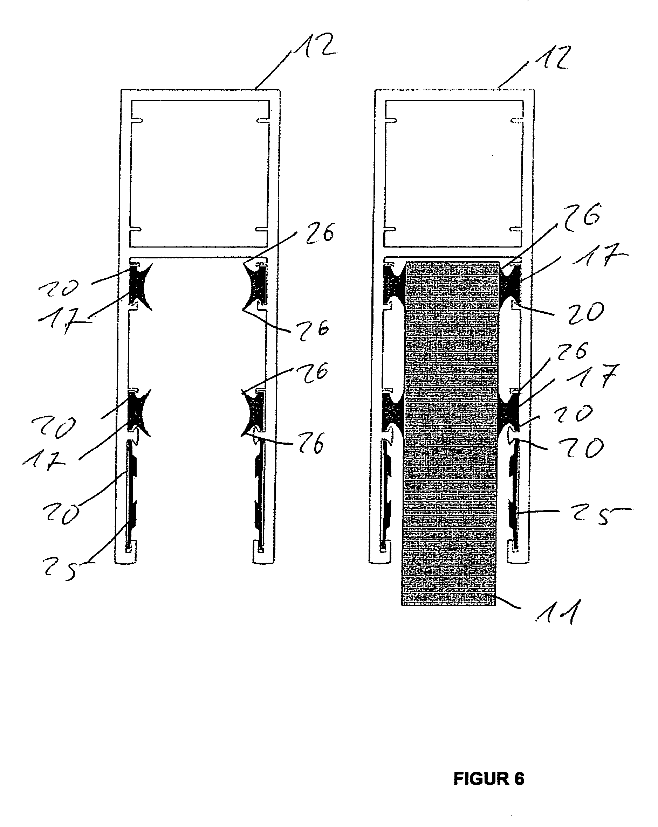

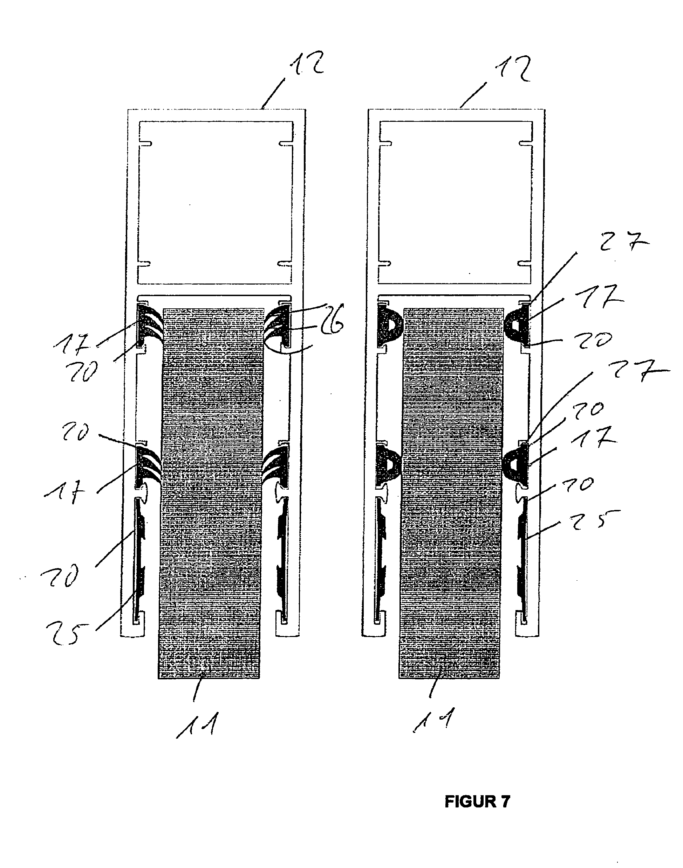

Die Fig. 6 und 7 zeigen Führungsschienen 12 mit unterschiedlichen zweiten Dichtungsprofilen 17 sowie Gleitprofilen 25, die an beiden Innenseiten der Führungsschiene 12 in formschlüssigen Gegenprofilen 20 angeordnet sind. Auf jeweils einer Innenseite der Führungsschiene 12 sind zwei voneinander beabstandete Dichtungsprofile 17 vorgesehen. In einer Darstellung in Fig. 6 ist zudem ein eingeschobenes Jalousie-Element 11 zu sehen, an dem die Dichtungsprofile 17 anliegen. Die Dichtungsprofile verfügen entweder über Dichtlippen 26 oder sind als Hohlprofil 27 ausgestaltet, das kompressibel ist.

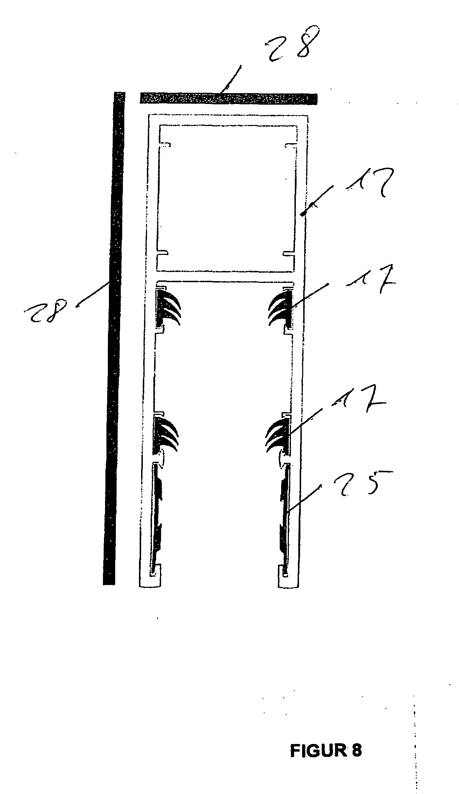

Um die Führungsschiene 12 gemäß Fig. 8 am nicht dargestellten Mauerwerk 18 dicht anbringen zu können, sind hier flächige Dichtungen 28 vorgesehen.

### Bezugszeichenliste

| | |
|---|---|
| Schutzvorrichtung | 100 |
| Jalousie-Element | 11 |
| Führungsschiene | 12 |
| Führungsrahmen | 13 |
| abzusperrendes Medium | 14 |
| Dichtungsprofil | 15 |
| Längskeil | 16 |
| Zweites Dichtungsprofil | 17 |
| Mauerwerk | 18 |
| Gebäudeöffnung | 19 |
| formschlüssiges Gegenprofil | 20 |
| Hohlraum | 21 |
| Steg | 22 |
| Wandung | 23 |
| Rolle | 24 |
| Gleitprofil | 25 |
| Dichtlippe | 26 |
| Hohlprofil | 27 |
| Flächige Dichtung | 28 |

## Patentansprüche

1. Schutzvorrichtung (100) zur Absperrung von Fenster- oder Türöffnungen gegen spritzende, fließende, stehende und drückende flüssige bis zähfließende Medien mit horizontal angeordneten, miteinander gelenkig verbundenen Jalousie-Elementen (11) und einem nach einer Seite offenen Führungsrahmen (13), der zwei seitlich an den Jalousie-Elementen angeordnete Führungsschienen (12) aufweist, in denen die Jalousie-Elemente (11) vertikal verschiebbar angeordnet sind, wobei
zwischen den einzelnen Jalousie-Elementen (11) sowie zwischen dem Führungsrahmen (13) und den Jalousie-Elementen (11) jeweils mindestens ein Dichtungsprofil (15, 17) angeordnet ist, **dadurch gekennzeichnet, dass** die gelenkige Verbindung der Jalousie-Elemente (11) eine Verschiebbarkeit der einzelnen Jalousieelemente in Relation zueinander zulässt, um eine Kompression der Dichtungsprofile (15, 17) zu ermöglichen.

2. Schutzvorrichtung nach Anspruch 1, **dadurch gekennzeichnet, dass** die beiden Führungsschienen (12) an einer Seite mit einer Abschlussschiene verbunden sind, an dem ein Dichtungsprofil angeordnet sein kann.

3. Schutzvorrichtung nach Anspruch 1 oder 2, **dadurch gekennzeichnet, dass** das Jalousie-Element (11), das der Abschlussschiene benachbart ist bzw. das von der offenen Seite des Führungsrahmens (13) am weitesten entfernt ist, auf der dem benachbarten Jalousie-Element (11) abgewandten Seite ein Dichtungsprofil aufweist.

4. Schutzvorrichtung nach einem der Ansprüche 1 bis 3, **dadurch gekennzeichnet, dass** das oder die zwischen den einzelnen Jalousie-Elementen (11) angeordneten Dichtungsprofile (15) kraft- und formschlüssig mit einem Jalousie-Element (11) verbunden ist bzw. sind.

5. Schutzvorrichtung nach einem der Ansprüche 1 bis 4, **dadurch gekennzeichnet, dass** das mindestens ein zwischen dem Führungsrahmen (13) und den Jalousie-Elementen (11) angeordnetes Dichtungsprofil (17) kraft- und formschlüssig mit dem Führungsrahmen (13) verbunden ist.

6. Schutzvorrichtung nach Anspruch 4 oder 5, **dadurch gekennzeichnet, dass** die kraft- und formschlüssig mit den Jalousie-Elementen (11) und dem Führungsrahmen (13) verbundenen Dichtungsprofile (15, 17) mit den Jalousie-Elementen (11) und dem Führungsrahmen (13) verklebt und/oder durch formschlüssige Gegenprofile (20) oder vergleichbare alternative mechanische Verbindungen aneinander gefügt sind.

7. Schutzvorrichtung nach einem der Ansprüche 1 bis 6, **dadurch gekennzeichnet, dass** die Jalousie-Elemente (11) einen Verbund ausbilden, der den Führungsrahmen (13) zumindest vollständig ausfüllt.

8. Schutzvorrichtung nach einem der Ansprüche 1 bis 7, **dadurch gekennzeichnet, dass** ein bis zu einer der Funktion entsprechenden Endlage ausgefahrene Verbund der Jalousie-Elemente (11) gegenüber dem Führungsrahmen (13) mittels eines in seiner Wirkspannung regulierbaren Längskeiles (16) kraft- und formschlüssig verkeilbar ist.

9. Schutzvorrichtung nach einem der Ansprüche 1 bis 8, **dadurch gekennzeichnet, dass** jeweils in den Führungsschienen (12) auf mindestens einer zu den Jalousie-Elementen (11) gewandten Seite mindestens ein Dichtungsprofil (17) angeordnet ist.

10. Schutzvorrichtung nach einem der Ansprüche 1 bis 9, **dadurch gekennzeichnet, dass** jeweils in den Führungsschienen (12) auf beiden zu den Jalousie-Elementen (11) gewandten Seiten Gleitprofile (25) angeordnet sind.

11. Schutzvorrichtung nach einem der Ansprüche 1 bis 10, **dadurch gekennzeichnet, dass** die Jalousie-Elemente (11) an den im Führungsrahmen (13) befindlichen Seiten Rollen (24) aufweisen.

12. Schutzvorrichtung nach einem der Ansprüche 1 bis 11, **dadurch gekennzeichnet, dass** die Schutzvorrichtung (100) über Mittel zur Bewegung der Jalousie-Elemente (11) in Relation zum Führungsrahmen (13) verfügt.

13. Schutzvorrichtung nach einem der Ansprüche 1 bis 12, **dadurch gekennzeichnet, dass** die Schutzvorrichtung (100) über Mittel zur Druckbeaufschlagung der Jalousie-Elemente (100) in vertikaler und/oder horizontaler Richtung verfügt.

14. Schutzvorrichtung nach einem der Ansprüche 1 bis 13, **dadurch gekennzeichnet, dass** die Schutzvorrichtung (100) als Aussenjalousie, Rollladen, Rolltor oder Sektionaltor ausgebildet ist.

## Claims

1. A protective device (100) for closing off window or door openings against spraying, flowing, standing or pressure-exerting liquid to viscous media with slatted-blind elements (11) disposed horizontally and connected to one another in an articulated manner and a guide frame (13), which is open to one side and which comprises two guide rails (12) disposed at the sides next to the slatted-blind elements, in which guide rails the slatted-blind elements (11) are disposed vertically displaceable, wherein
at least one sealing profile (15, 17) is disposed in each case between the individual slatted-blind elements (11) and also between the guide frame (13) and the slatted-blind elements (11), **characterised in that** the articulated connection of the slatted-blind elements (11) permits a displaceability of the individual slatted-blind elements in relation to one another, in order to enable a compression of the sealing profile (15, 17).

2. The protective device according to claim 1, **characterised in that** the two guide rails (12) are connected at one side to a closure rail, on which a sealing profile can be disposed.

3. The protective device according to claim 1 or 2, **characterised in that** the slatted-blind element (11) which is adjacent to the closure rail, i.e. farthest removed from the open side of the guide frame (13), comprises a sealing profile on the side facing away from the adjacent slatted-blind element (11).

4. The protective device according to any one of claims 1 to 3, **characterised in that** the sealing profile or profiles (15) disposed between the individual slatted-blind elements (11) is or are connected to a slatted-blind element (11) in a friction-locked or form-fit manner.

5. The protective device according to any one of claims 1 to 4, **characterised in that** the at least one sealing profile (17) disposed between the guide frame (13) and the slatted-blind elements (11) is connected to the guide frame (13) in a friction-locked or form-fit manner.

6. The protective device according to claim 4 or 5, **characterised in that** the sealing profiles (15, 17) connected in a friction-locked or form-fit manner to the slatted-blind elements (11) and the guide frame (13) are glued to the slatted-blind elements (11) and the guide frame (13) and/or joined with one another by form-fit counter-profiles (20) or comparable alternative mechanical connections.

7. The protective device according to any one of claims 1 to 6, **characterised in that** the slatted-blind elements (11) form a composite structure which at least completely fills the guide frame (13).

8. The protective device according to any one of claims 1 to 7, **characterised in that** a composite structure of the slatted-blind elements (11) extended up to an end position corresponding to the function can be wedged in a friction-locked or form-fit manner with respect to the guide frame (13) by means of a longitudinal wedge (16) which can be regulated in its effective clamping.

9. The protective device according to any one of claims 1 to 8, **characterised in that** at least one sealing profile (17) is disposed in each case in the guide rails (12) on at least one side facing the slatted-blind elements (11).

10. The protective device according to any one of claims 1 to 9, **characterised in that** sliding profiles (25) are disposed in each case in the guide rails (12) on both sides facing the slatted-blind elements (11).

11. The protective device according to any one of claims 1 to 10, **characterised in that** the slatted-blind elements (11) comprise rollers (24) at the sides located in the guide frame (13).

12. The protective device according to any one of claims 1 to 11, **characterised in that** the protective device (100) comprises means for moving the slatted-blind elements (11) in relation to the guide frame (13).

13. The protective device according to any one of claims 1 to 12, **characterised in that** the protective device (100) comprises means for applying pressure to the slatted-blind elements (100) in the vertical and/or horizontal direction.

14. The protective device according to any one of claims 1 to 13, **characterised in that** the protective device (100) is constituted as an external slatted-blind, a roller blind, a roller door or a sectional door.

## Revendications

1. Dispositif de protection (100) pour obturer des ouvertures de fenêtres ou de portes contre des fluides liquides à semi-liquides projetés, stagnants et déprimants, avec des éléments de persienne (11) disposés à l'horizontale, reliés ensemble de manière articulée et un cadre de guidage (13) ouvert sur un côté qui comporte deux coulisses de guidage (12) disposées latéralement sur les éléments de persienne, dans lesquelles les éléments de persienne (11) sont disposées en étant déplaçables à la verticale,
entre chacun des éléments de persienne (11), ainsi qu'entre le cadre de guidage (13) et les éléments de persienne (11) étant disposé chaque fois au moins un profilé d'étanchéité (15, 17), **caractérisé en ce que** la liaison articulée des éléments de persienne (11) admet une aptitude au déplacement de chacun des éléments de persienne en relation réciproque, pour permettre une compression du profilé d'étanchéité (15, 17).

2. Dispositif de protection selon la revendication 1, **caractérisé en ce que** les deux coulisses de guidage (12) sont reliées sur un côté avec une coulisse de terminaison sur laquelle il est possible de disposer un profilé d'étanchéité.

3. Dispositif de protection selon la revendication 1 ou la revendication 2, **caractérisé en ce que**, sur le côté opposé à l'élément de persienne (11) voisin, l'élément de persienne (11) qui est voisin de la coulisse de terminaison ou qui est le plus éloigné du côté ouvert du cadre de guidage (13) comporte un profilé d'étanchéité.

4. Dispositif de protection selon l'une quelconque des revendications 1 à 3, **caractérisé en ce que** le ou les profilé(s) d'étanchéité (15) disposé(s) entre chacun des éléments de persienne (11) est ou sont relié(s) par complémentarité de force et de forme avec un élément de persienne (11).

5. Dispositif de protection selon l'une quelconque des revendications 1 à 4, **caractérisé en ce que** l'au moins un profilé d'étanchéité (17) disposé entre le cadre de guidage (13) et les éléments de persienne (11) est relié par complémentarité de force et de forme avec le cadre de guidage (13).

6. Dispositif de protection selon la revendication 4 ou la revendication 5, **caractérisé en ce que** les profilés d'étanchéité (15, 17) reliés par complémentarité de force et de forme avec les éléments de persienne (11) et le cadre de guidage (13) sont collés sur les éléments de persienne (11) et le cadre de guidage (13) et/ou sont joints les uns aux autres par des contre-profilés (20) à complémentarité de forme ou par des liaisons mécaniques en variante.

7. Dispositif de protection selon l'une quelconque des revendications 1 à 6, **caractérisé en ce que** les éléments de persienne (11) forment un ensemble qui remplit au moins totalement le cadre de guidage (13).

8. Dispositif de protection selon l'une quelconque des revendications 1 à 7, **caractérisé en ce qu'**un ensemble des éléments de persienne (11) sorti jusqu'à une position extrême correspondant à la fonction peut se caler par complémentarité de force et de forme par rapport au cadre de guidage (13) au moyen d'une cale longitudinale (16) réglable dans sa tension active.

9. Dispositif de protection selon l'une quelconque des revendications 1 à 8, **caractérisé en ce qu'**au moins un profilé d'étanchéité (17) est disposé chaque fois dans les coulisses de guidage (12) sur au moins l'une des faces dirigée vers les éléments de persienne (11).

10. Dispositif de protection selon l'une quelconque des revendications 1 à 9, **caractérisé en ce que** des profilés coulissants (25) sont disposés chaque fois dans des coulisses de guidage (12), sur les deux faces dirigées vers les éléments de persienne (11).

11. Dispositif de protection selon l'une quelconque des revendications 1 à 10, **caractérisé en ce que** sur les côtés se trouvant dans le cadre de guidage (13), les éléments de persienne (11) comportent de galets (24).

12. Dispositif de protection selon l'une quelconque des revendications 1 à 11, **caractérisé en ce que** le dispositif de protection (100) dispose de moyens pour le déplacement des éléments de persienne (11) en relation avec le cadre de guidage (13).

13. Dispositif de protection selon l'une quelconque des revendications 1 à 12, **caractérisé en ce que** le dispositif de protection (100) dispose de moyens pour soumettre à une pression les éléments de persienne (100) en direction verticale et/ou horizontale.

14. Dispositif de protection selon l'une quelconque des revendications 1 à 13, **caractérisé en ce que** le dispositif de protection (100) est conçu en tant que persienne extérieure, en tant que volet roulant, en tant que de portail roulant ou en tant que portail sectionné.
